# EUROPEAN PATENT APPLICATION

(11) **EP 4 309 982 A2**
(43) Date of publication of application: **24.01.2024**
(21) Application number: 23178464.6
(22) Date of filing: 09.06.2023
(51) Int. Cl.: B62J 45/412, B62J 45/423, B62M 6/50, G01P 3/00

(54) **BICYCLE CONTROL SYSTEM**

(30) Priority: 23.06.2022 US 202217848121
(71) Applicant: SRAM, LLC., Chicago, IL 60607 (US)
(72) Inventor: Hahn, Sage, Chicago, 60625 (US); Sessions, Shelby, Chicago, 60607 (US); Heyna, Sebastian, 97456 Hambach (DE)
(74) Representative: Thum, Bernhard

(57) **Abstract**

An electronic component for a bicycle includes a processor configured to receive first data from a first sensor configured to sense at least one sensed element disposed about a bicycle wheel as the sensed element rotates through a proximal region of the first sensor. The processor is further configured to receive second data from a second sensor. The second data is different than the first data. The processor is configured to determine a first speed based on a subset of the received first data when the sensed element is within the proximal region of the first sensor, and determine a second speed based on a subset of the received second data and the first speed when the sensed element is not within the proximal region of the first sensor.

## Description

### Background

### 1. Field of the Disclosure

The present disclosure is generally directed to an electric bicycle, and more particularly, to control of the electric bicycle.

### 2. Description of Related Art

A bicycle with a pedal assist electric motor (e.g., an electric bicycle or an e-bike) may be required by law to not provide motor assistance to a rider if the electric bicycle is traveling above a speed threshold (e.g., 25 kph). To prevent motor assistance above the speed threshold, a bicycle control system is to have information about a speed of the electric bicycle. Bicycle speed information is typically provided by a sensor (e.g., reed switch, Hall effect) mounted in proximity to the rear wheel, which detects a magnet mounted to a wheel (e.g., a rear wheel). The speed sensor typically generates one pulse per revolution of the wheel each time the magnet passes by the sensor. A time between sensor pulses may be used to calculate an angular velocity of the wheel (e.g., wheel revolutions per minute (RPM)). A speed of the bicycle may be calculated by multiplying the wheel RPM by a circumference of the wheel, and the calculated speed of the bicycle may be used to control the pedal assist motor.

### Summary

In one example, an electronic component for a bicycle includes a processor configured to receive first data from a first sensor configured to sense at least one sensed element disposed about a bicycle wheel as the at least one sensed element rotates through a proximal region of the first sensor. The processor is further configured to receive second data from a second sensor. The second data is different than the first data. The processor is configured to determine a first speed based on a subset of the received first data when a sensed element of the at least one sensed element is within the proximal region of the first sensor, and determine a second speed based on a subset of the received second data and the first speed when the sensed element is not within the proximal region of the first sensor.

In one example, the first sensor is a bicycle wheel speed sensor, and the second sensor is an accelerometer.

In one example, the processor is further configured to compare the determined second bicycle speed to a predetermined threshold speed, and control an assist motor of the bicycle based on the comparison.

In one example, the processor being configured to control the assist motor of the bicycle based on the comparison includes the processor being configured to prevent or stop the assist motor of the bicycle from providing power to a drive train of the bicycle when the determined second bicycle speed is greater than the predetermined threshold speed.

In one example, the first data includes a first data point, a second data point, and a third data point that identify receipt of magnetic field pulses by the first sensor at a first time point, a second time point, and a third time point, respectively. The second time point is after the first time point, and the third time point is after the second time point. The second data includes a plurality of data points received at a plurality of time points, respectively, between the second time point and the third time point, the plurality of data points representing accelerations of the bicycle, respectively.

In one example, the subset of the received first data includes the first data point and the second data point. The determination of the first speed includes determination of the first speed at the second time point based on the first data point of the first data received at the first time point and the second data point of the first data received at the second time point. The subset of the received second data includes a data point of the plurality of data points of the second data received by the second sensor at a fourth time point. The fourth time point is between the second time point and the third time point. The determination of the second speed includes determination of the second speed at the fourth time point based on the determined first speed and the data point of the second data received by the second sensor at the fourth time point.

In one example, the determination of the first speed further includes determination of a time period between the second time point and the first time point, and determination of the first speed based on the determined time period and a circumference of a wheel of the bicycle.

In one example, for each data point of the plurality of data points of the second data received by the second sensor between the second time point and the third time point, the processor is further configured to update the determined second speed. Each respective update of the determined second speed includes determination of a change in velocity based on the respective data point of the second data, and calculation of an updated second speed. The calculation of the updated second speed includes a sum of the determined second speed and the determined change in velocity. Tor each data point of the plurality of data points of the second data received by the second sensor between the second time point and the third time point, the processor is further configured to compare the updated second speed to a predetermined threshold speed, control an assist motor of the bicycle based on the comparison of the updated second speed to the predetermined threshold speed, and set the second speed as the updated second speed.

In one example, the determination of the change in velocity includes integration of the respective data point of the second data over a sampling period of the second sensor.

In one example, the subset of the received first data is a first subset of the received first data. The processor is further configured to update the first speed based on a second subset of the received first data. The second subset of the received first data includes the second data point and the third time point received at the second time point and the third time point, respectively. The processor is further configured to determine a third speed at the third time point when the sensed element is within the proximal region of the first sensor. The determination of the third speed includes calculation of a weighted sum of the updated first speed and the updated second speed.

In one example, a first of the weights, which corresponds to the updated first speed, and a second of the weights, which corresponds to the updated second speed, are variable based on the bicycle speed.

In one example, the predetermined threshold speed is a first predetermined threshold. At the third time point, the processor is further configured to determine a difference between the updated first speed and the updated second speed, compare the determined difference to a second predetermined threshold, and identify, based on the comparison of the determined difference to the second predetermined threshold, wheel slip or wheel lock.

In one example, the processor is configured to identify the wheel slip when the updated first speed is greater than the updated second speed and the determined difference is greater than the second predetermined threshold.

In one example, the processor is further configured to calibrate the received second data. The calibration of the received second data includes identification of third data. The third data is related to an orientation of the bicycle, an acceleration of the bicycle, a position of the bicycle, or any combination thereof. A source of the third data is different than the first sensor and the second sensor. The calibration of the received second data includes calibration of the received second data based on the identified third data.

In one example, the identified third data represents a magnetic heading of the bicycle, acceleration due to gravity, or global positioning system (GPS) data.

In one example, a system for controlling a bicycle includes a first sensor configured to generate first data at a first sampling rate. The first data includes a first data point received at a first time point and a second data point received at a second time point. The second time point is after the first time point. The first data point and the second data point of the first data identify reception of magnetic field pulses at the first time point and the second time point, respectively. The system also includes a second sensor configured to generate second data at a second sampling rate. The second sampling rate is greater than the first sampling rate. The second data includes a data point identifying an acceleration of the bicycle. The system also includes a memory configured to store data for a circumferential distance of a wheel of the bicycle, and a processor in communication with the memory, the first sensor, and the second sensor. The processor is configured to receive the first data and the second data, and determine a first speed. The determination of the first speed includes determination of a time period between the receipt of the second data point at the second time point and the receipt of the first data point at the first time point, and determination of the first speed based on the determined time period and the stored data for the circumferential distance of the wheel. The processor is further configured to determine a second speed. The determination of the second speed includes determination of a change in velocity. The determination of the change in velocity includes integration of the acceleration of the data point over a sampling period. The sampling period being based on the second sampling rate. The determination of the second speed further includes determination of the second speed based on the determined change in velocity and the determined first speed.

In one example, the processor is further configured to compare the determined second speed to a predetermined threshold speed, and control an assist motor of the bicycle based on the comparison.

In one example, the first sensor is a first type of sensor, and the second sensor is a second type of sensor. The second type of sensor is different than the first type of sensor.

In one example, the first sensor is a reed switch or a Hall effect sensor, and the second sensor includes an accelerometer.

In one example, a controller for a bicycle includes a processor configured to receive first data from a first sensor at a first sampling rate. The first data includes two data points identifying two time points at which magnetic field pulses are received by the first sensor, respectively. The processor is further configured to receive first data from a first sensor at a first sampling rate. The first data includes two data points identifying two time points at which magnetic field pulses are received by the first sensor, respectively. The processor is further configured to receive second data from a second sensor at a second sampling rate. The second sampling rate is greater than the first sampling rate. The second data includes a data point identifying an acceleration of the bicycle. The processor is further configured to determine a first speed representation of the bicycle based on the identified two time points of the first data, determine a second speed representation of the bicycle based on the identified acceleration of the second, and determine a speed of the bicycle based on the determined first speed representation and the determined second speed representation.

### Brief Description of the Drawings

Objects, features, and advantages of the present invention will become apparent upon reading the following description in conjunction with the drawing figures, in which:
FIG. 1 shows a side view of one example of an electronic bicycle with component motion that may be controlled in accordance with the teachings of this disclosure;
FIG. 2 is a side view of one example of a rear derailleur;
FIG. 3 is a block diagram of an embodiment of an electromechanical control system;
FIG. 4 is a block diagram of an embodiment of an operation component;
FIG. 5 is a flowchart of an embodiment of a method for automatic shifting;
FIG. 6 is a flowchart of an embodiment of a method for determining a speed of a bicycle;
FIG. 7 is an example of plots of speeds of a bicycle, as determined using sensors of the bicycle, over time compared to a plot of true velocity of the bicycle over time; and
FIG. 8 is an example of a plot of acceleration of a bicycle, as determined by a sensor of the bicycle, over time compared to a plot of true acceleration of the bicycle over time.

### Detailed Description of the Disclosure

A bicycle with an electric pedal assist motor capable of driving a chainring independent of cranks is provided. The bicycle includes wheel speed sensors and crank cadence sensors. The wheel speed sensors and the crank cadence sensors measure wheel speed and crank cadence, respectively, and provide the measured wheel speed and crank cadence to an electric rear derailleur or a controller of the bicycle. The electric rear derailleur, for example, is configured to shift gears of the bicycle and/or instruct an e-bike controller to activate motor overdrive based on the measured wheel speed and/or the measured crank cadence.

Bicycle speed information (e.g., wheel speed sensor data related to a ground speed of the bicycle) is typically provided by a sensor (e.g., a wheel speed sensor such as a reed switch or a Hall effect sensor) mounted in proximity to a rear wheel of the bicycle. The sensor detects a magnet mounted to the rear wheel. The sensor typically generates one pulse per revolution of the rear wheel, each time the magnet passes by the sensor.

For implementation of an automatic shifting transmission (e.g., including the rear derailleur) on the bicycle, where the automatic shifting transmission continues to change gears even if the rider is not pedaling, an accurate measure of wheel speed is to be provided at a sampling rate of greater than once per wheel revolution. More feedback magnets may be included equally spaced on the rear wheel to increase the sampling rate. This, however, adds complexity and cost.

A control system of one or more of the present embodiments includes, for example, an accelerometer and a gyroscope. The accelerometer and the gyroscope together form an inertial measurement unit (IMU). The control system may also include a processor configured to calculate a speed (e.g., a ground speed) of the bicycle by combining low resolution wheel speed sensor data (e.g., one pulse per revolution; a first speed) with higher resolution data from the IMU (e.g., the calculated positional displacement and heading). The processor periodically (e.g., every sampling interval such as every microsecond) samples the IMU, integrating each sample over the sampling interval to update the speed of the bicycle (e.g., a second speed). Each time the wheel speed sensor generates an event (e.g., detects the magnet), the processor updates the first speed based on a time interval between temporally successive events generated by the wheel speed sensor.

In one embodiment, the processor may combine the first speed and the second speed into a single speed value for the bicycle by multiplying each of the first speed and the second speed by a respective scaling constant, and summing the scaled first speed and the scaled second speed. Respective values of the scaling constants may shift depending on the speed of the bicycle. For example, at higher speeds of the bicycle, the wheel speed sensor becomes more accurate and updates more frequently, such that utility of the second speed, which is determined based on the data generated by the IMU, is reduced.

The performance of an automatic shifting method, for example, improves the faster a determined wheel speed may be accurately updated. Further, electric bicycles may be required by law to not provide motor assistance to the rider if the e-bike is traveling above a speed threshold (e.g., 25 kph). To prevent motor assistance above a speed threshold, a motor control system is to have information about the bicycle speed. The combination of the low resolution wheel speed sensor data with the higher resolution data from the IMU of the present embodiments provides for more frequent determinations of the speed of the bicycle and/or wheel speed, and thus, improved performance for automatic shifting and motor assistance control.

These and other objects, features, and advantages of the disclosed bicycle component control will become apparent to those having ordinary skill in the art upon reading this disclosure. Throughout the drawing figures, where like reference numbers are used, the like reference numbers represent the same or substantially similar parts among the various disclosed examples. Also, specific examples are disclosed and described herein that utilize specific combinations of the disclosed aspects, features, and components of the disclosure. However, it is possible that each disclosed aspect, feature, and/or component of the disclosure may, in other examples not disclosed or described herein, be used independent of or in different combinations with other of the aspects, features, and components of the disclosure.

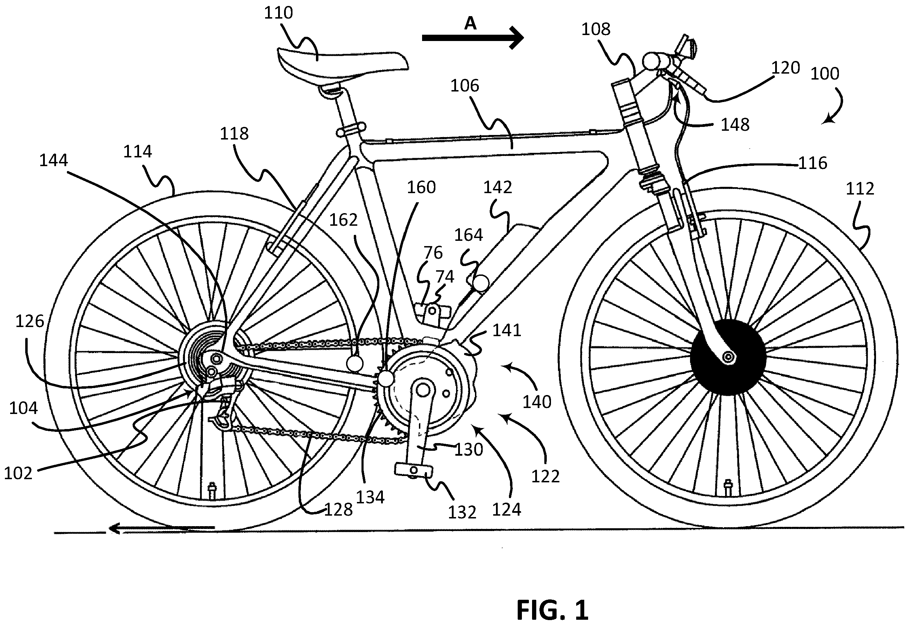

Turning now to the drawings, FIG. 1 illustrates an example bicycle 100 (e.g., e-bike) that includes a frame 106, handlebars 108, and a seat 110. The bicycle 100 also includes a first or front wheel 112 and a second or rear wheel 114. A front brake 116 and/or a rear brake 118 are included to brake the front wheel 112 and the rear wheel 114, respectively. The front brake 116 and/or the rear brake 118 are controlled by at least one brake actuator 120. The bicycle 100 includes a drive train 122. The drive train 122 of FIG. 1 includes a crank assembly 124 operatively coupled to a rear cassette 126 via a chain 128. The crank assembly includes crank arms 130 and pedals 132, as well as at least one chainring 134 configured to operatively couple with the chain 128 to transmit force and/or power exerted onto the crank assembly 124 to the chain 128. This force and/or power is transmitted to the rear cassette 126 by the chain 128, whereby a motivating force 136 and/or power is transmitted to the rear wheel 114 from the rear cassette 126. While the drive train 122 includes a gear changer (e.g., a rear derailleur 102 in the illustrated embodiment), other transmissions such as an internal gear hub, a gear box, and/or a continuously variable transmission may be applied to the bicycle 100.

The drive train 122 may also include a power assist device 140. Pedaling torque is applied to the crank assembly 124 by a rider using the pedals 132 and crank arms 130. The power assist device 140 is configured to assist the rotation of the rear wheel 114. In the illustrated embodiment, the power assist device 140 is configured to assist the rotation of the rear wheel 114 via a coupled connection to the crank assembly 124. The power assist device 140 includes a power assist motor 141 that is powered by a remote power source 142.

The chain 128 may be moved between individual sprockets of the rear cassette 126 using the gear changer, such as the rear derailleur 102, as shown in FIG. 1. The rear derailleur 102, for example, is an electric gear changer that is controlled by signals indicating that a shift command has been actuated by the bicycle operator, or rider. The electric rear derailleur 102 may be alternatively powered by an integrated power source or the remote power source 142, using a power conductive connector or cable 144. The power is provided from the remote power source 142 through the cable 144 to an intermediate power connector 104 that is coupled to the rear derailleur 102. The shift commands are implemented using an electric actuator 148 that is manually operable by the rider. The signals indicating the shift commands may be communicated to the electric rear derailleur 102 using wired and/or wireless communication techniques.

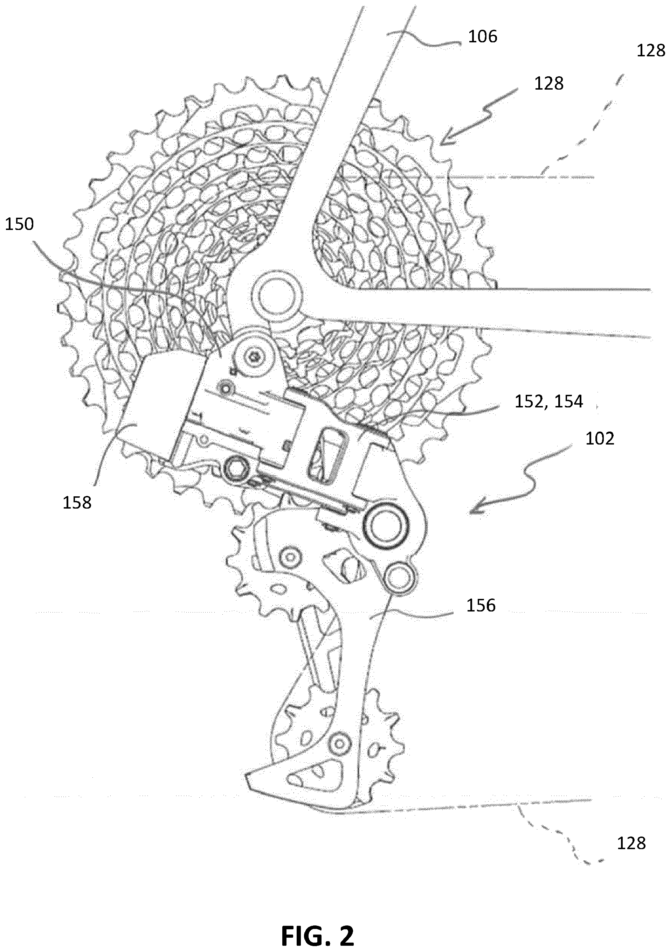

Referring to FIG. 2, the rear derailleur 102 is attached to the bicycle frame 106 and positioned next to the rear cassette 126. The chain 128 is only schematically shown in dashed lines. The electric, or electromechanical, rear derailleur 102 includes a base member 150 (e.g., a "b-knuckle"), an outer link 152, and an inner link 154. The base member 150 is attachable to the bicycle frame 106 in a conventional manner. The inner link 154 is pivotally attached to the base member 150 by link pins, for example. A moveable member or assembly 156 (e.g., a "p-knuckle") is pivotally connected to the outer link 152 and the inner link 154 at an end opposite the base member 150 to permit displacement of the moveable assembly 156 relative to the base member 150.

The rear derailleur 102 may also be configured to work with an integrated power source 158, such as a removable battery. In the examples shown in FIGS. 1 and 2, the integrated power source or battery 158 is attached to the rear derailleur 102. The integrated power source 158 may power, for example, a motor of the rear derailleur 102 used to shift the rear derailleur 102.

As shown in FIG. 1, the bicycle 100 also has a handlebar mounted user interface, by way of the shift actuator or electric actuator 148. All of the electric components discussed above and/or other electric components may be connected to the remote power source or remote battery 142. Additionally, all communication between an e-bike central control system or controller, and each of these electric components is achieved through wired or wireless communication. There may be discrete control with individual wires from the central controller to each component, or the system may use a controller area network ("CAN") bus designed to allow microcontrollers and devices to communicate with each other in applications.

While the illustrated bicycle 100 is a mountain bicycle and may include suspension components, such as a shock absorbing front fork, the embodiments disclosed herein may be implemented with other types of bicycles such as, for example, road bicycles. The front and/or forward orientation of the bicycle 100 is indicated by the direction of the arrow "A" in FIG. 1. As such, a forward direction of movement of the bicycle is indicated by the direction of the arrow A.

An e-bike central control system or controller may be supported by a same housing as the remote power source 142. The e-bike controller may control power from the remote power source 142 to components on the bicycle 100 such as, for example, the power assist device 140. The e-bike controller may control power to other and/or different components on the bicycle 100. The e-bike controller may send signals (e.g., instructions) to and/or receive data (e.g., instructions and/or sensor data) from components on the bicycle 100 such as, for example, the derailleur 102, a suspension system, and/or a seat post assembly to actuate and/or control components of the bicycle 100.

In other embodiments, the e-bike controller may be located in other locations (e.g., mounted on the handlebars) on the bicycle 100 or, alternatively, may be distributed among various components of the bicycle 100, with routing of a communication link to accommodate necessary signal and power paths. The e-bike controller may also be located other than on the bicycle 100, such as, for example, on a rider's wrist or in a jersey pocket. The communication link may include wires, may be wireless, or may be a combination thereof. In one example, the e-bike controller may be integrated with the rear derailleur 102 to communicate control commands between components. The e-bike controller may include a processor, a communication device (e.g., a wireless communication device), a memory, and one or more communication interfaces.

In one example, the controller of the derailleur and/or the e-bike controller wirelessly actuates a motor module of the derailleur 102 and/or an assist motor and operates the derailleur 102 for executing gear changes and gear selection. Additionally or alternatively, the controller of the derailleur and/or the e-bike controller may be configured to control gear shifting of a front gear changer.

The bicycle 100 may include one or more sensors. For example, the one or more sensors include a wheel speed sensor 160 that is configured to determine a wheel speed based on sensing a sensing element 162 (e.g., a magnet) positioned on, for example, the rear wheel 114 of the bicycle 100. The one or more sensors may also include, for example, an inertial measurement unit (IMU) 164 as part of, for example, the e-bike controller.

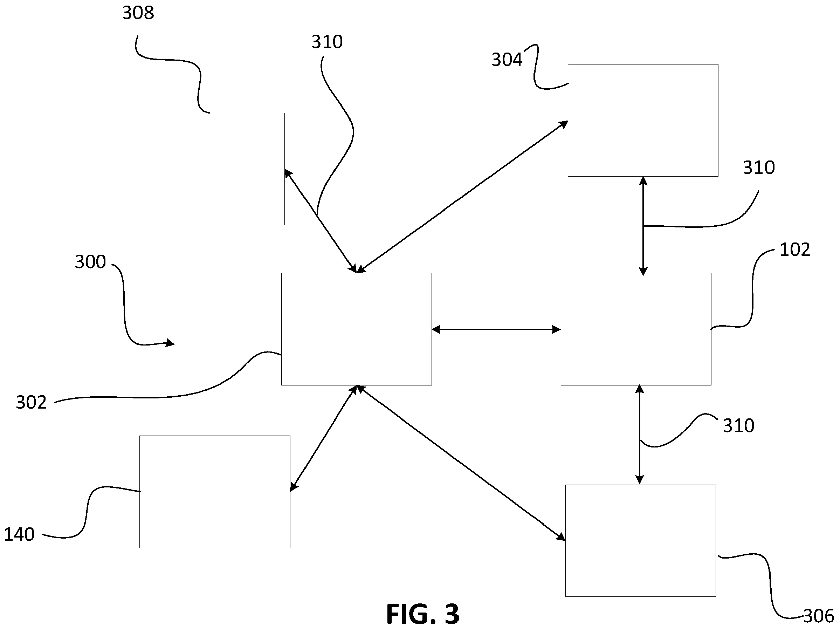

FIG. 3 shows an example of a control system 300 (e.g., an electromechanical control system) for the bicycle 100, for example. The control system 300 includes an e-bike controller 302, the power assist device 140, the rear derailleur 102, and one or more sensors. The power assist device 140 is, for example, an assist motor.

The one or more sensors include, for example, a pedal speed sensor 304, a wheel speed sensor 306 (e.g., the wheel speed sensor 160), and an IMU 308 (e.g., the IMU 164). For example, the pedal speed sensor 304 measures a rotational speed of at least one of the crank arms 130, the wheel speed sensor 306 measures a rotational speed of at least one of the wheels 114, 112, and the IMU 308 measures acceleration and angular velocity. In one embodiment, the one or more sensors may include at least two wheel speed sensors 306, one for the front wheel 112 and one for the rear wheel 114.

The pedal speed sensor 304, the wheel speed sensor 306, and the IMU 308 may be any number of different types of sensors. For example, the pedal speed sensor 304 and the wheel speed sensor 306 may be a combined speed and cadence sensor. The speed and cadence sensor may include a spoke magnet attached to a spoke of the front wheel 112 or the rear wheel 114 and/or a cadence magnet attached to one of the crank arms 130, and a sensor attached to the frame 106 of the bicycle 100 (e.g., a Hall effect sensor). The sensor attached to the frame 106 of the bicycle is configured to identify and count rotations of the one crank arm 130 and/or the front wheel 112 or the rear wheel 114 based on the cadence magnet and/or the spoke magnet passing the sensor attached to the frame 106, respectively. The IMU 308 may include, for example, a combination of one or more accelerometers and a gyroscope. The IMU 308 may be housed with the e-bike controller 302 or housed separately from the e-bike controller 302.

The control system 300 may include more, fewer, and/or different sensors. For example, the one or more sensors may include a torque sensor that measures a torque on the crank assembly 124 and/or a torque on an output shaft of the assist motor 140. Any number of different types of torque sensors may be provided. For example, the torque sensor may include magnetoelastic torque sensors, strain gauges, SAW devices, and/or other types of torque sensors. In one embodiment, the torque sensor is a current sensor that measures current through the assist motor 140. The amount of current consumed by the assist motor 140 is proportional to a torque the assist motor 140 applies to a drivetrain of the bicycle 100.

As shown in the embodiment of FIG. 3, the power assist device 140, the rear derailleur 102, and the one or more sensors (e.g., the pedal speed sensor 304, the wheel speed sensor 306, and the IMU 308) may be in direct communication with the e-bike controller 302. Alternatively or additionally, at least some components of the control system 300 may be in indirect communication with the e-bike controller 302. For example, the wheel speed sensor 306, the pedal speed sensor 304, and/or the IMU 308 may be in direct communication with the rear derailleur 102 and indirect communication with the with the e-bike controller 302 via the rear derailleur 102. In one embodiment, each of at least the rear derailleur 102 and the e-bike controller 302 is in direct communication with all sensors of, for example, the pedal speed sensor 304, the wheel speed sensor 306, and the IMU 308. Other and/or different components of the control system 300 may be in direct communication with all sensors of the one or more sensors (e.g., the power assist device 140). Communication between the components of the control system 300 may be wired communication and/or wireless communication.

Each communication link 310 between the components of the control system 300 may be in both directions. In other words, data flow between components of the control system 300 in direct communication may be in both directions. For example, the wheel speed sensor 306 may receive signals from the e-bike controller 302 or the rear derailleur 102 (e.g., as to when to measure the rotational speed) and return the measured rotational speed to the e-bike controller 302 or the rear derailleur 102.

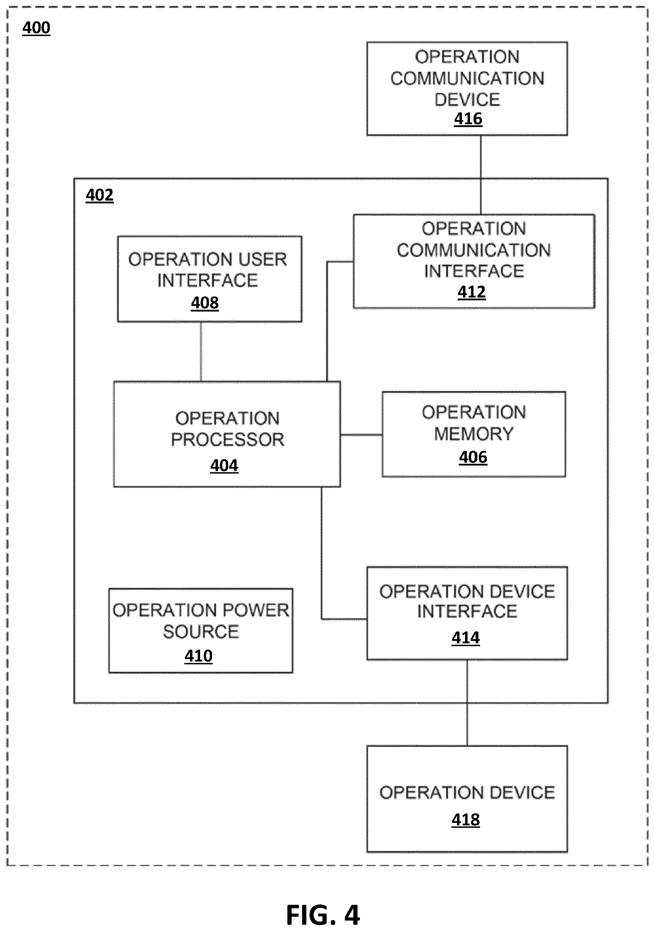

FIG. 4 is a block diagram of an operation component 400. The operation component 400 may be or may be part of one or more of the previously described electronic components such as, for example, the rear derailleur 102, the e-bike controller 302, and a front gear changer. The operation component 400 may also be another component, such as the power assist device 140, an internal gearbox component, a suspension or an adjustable suspension component, or an adjustable seating component. A plurality of operation components 400 may be provided.

The operation component 400 is provided with an operation unit 402, which may be a circuit board or an alternative configuration. The operation unit 402 includes an operation processor 404, an operation memory 406, an operation user interface 408, an operation power source 410, an operation communication interface 412, and an operation device interface 414. In an embodiment, the operation communication interface 412 is in communication with an operation communication device 416, and the operation device interface 414 is in communication with an operation device 418. Additional, different, or fewer components may be provided. For example, the operation user interface 408 may be omitted.

The structure, connections, and functions of the operation processor 404 may be representative of those of the rear derailleur 102, the front derailleur, the e-bike controller 302, or another component. The operation processor 404 may include a general processor, digital signal processor, an ASIC, FPGA, analog circuit, digital circuit, combinations thereof, or other now known or later developed processor. The operation processor 404 may be a single device or combinations of devices, such as through shared or parallel processing.

The operation memory 406 may be a volatile memory or a non-volatile memory. The operation memory 406 may include one or more of a ROM, a RAM, a flash memory, an EEPROM, or other type of memory. The operation memory 406 may be removable from the operation component 400, such as an SD memory card. In a particular non-limiting, exemplary embodiment, a computer-readable medium may include a solid-state memory such as a memory card or other package that houses one or more non-volatile read-only memories. Further, the computer-readable medium may be a random access memory or other volatile re-writable memory. Additionally, the computer-readable medium may include a magneto-optical or optical medium, such as a disk or tapes or other storage device. Accordingly, the disclosure is considered to include any one or more of a computer-readable medium and other equivalents and successor media, in which data or instructions may be stored.

The operation memory 406 is a non-transitory computer-readable medium and is described to be a single medium. However, the term "computer-readable medium" includes a single medium or multiple media, such as a centralized or distributed memory structure, and/or associated caches that are operable to store one or more sets of instructions and other data. The term "computer-readable medium" shall also include any medium that is capable of storing, encoding, or carrying a set of instructions for execution by a processor or that cause a computer system to perform any one or more of the methods or operations disclosed herein.

The operation power source 410 is a portable power source, which may be stored internal to the operation component 400 or stored external to the operation component 400 and communicated to the operation component through a power conductive cable. The operation power source 410 may involve the generation of electric power, for example using a mechanical power generator, a fuel cell device, photo-voltaic cells, piezoelectric, or other powergenerating devices. The operation power source 410 may include a battery such as a device consisting of two or more electrochemical cells that convert stored chemical energy into electrical energy. The operation power source 410 may include a combination of multiple batteries or other power providing devices. Specially fitted or configured battery types, or standard battery types may be used.

In the example where the operation component 400 is the rear derailleur 102, the operation power source 410 may be stored internal to the operation component 400. In the example where the operation component 400 is the e-bike controller 302, the operation power source 410 may be stored internal or external to the operation component 400. For example, the e-bike controller 302 may be supported within a housing of the remote power source 142 of FIG. 1.

The operation device interface 414 provides for operation of a component of the bicycle 100. For example, the operation device interface 414 may transmit power from the operation power source 410 to generate movement in the operation device 418. In various embodiments, the operation device interface 414 sends power to control movement of the assist motor 140, a motor of the rear derailleur 102, a motor of the front derailleur, or any combination thereof. In one embodiment, the operation component 400 is the e-bike controller 302, and the operation device interface 414 sends power to control movement of the power assist device 140. The operation device interface 414 includes wired conductive signals and/or data communication circuitry operable to control the operation device 418.

The operation user interface 408 may be one or more buttons, keypad, keyboard, mouse, stylus pen, trackball, rocker switch, touch pad, voice recognition circuit, or other device or component for communicating data between a user and the operation component 400. The operation user interface 408 may be a touch screen, which may be capacitive or resistive. The operation user interface 408 may include an LCD panel, LED, LED screen, TFT screen, or another type of display. The operation user interface 408 may also include audio capabilities or speakers.

The operation communication interface 412 is configured to receive, with the operation communication device 416, data such as measurement data (e.g., rotational crank speed, rotational wheel speed, bicycle speed, and/or torque), anticipation signals, operation signals, and/or other signals from bicycle components (e.g., the pedal speed sensor 304, the wheel speed sensor 306, the IMU 308, the torque sensor, and/or the e-bike controller 302). In one embodiment, the operation component 400 includes more than one operation communication interface 412 in communication with more than one operation communication device 416, respectively. The operation communication interface 412 may also be configured to send data such as status signals (e.g., temperature sensor signals) for reception by, for example, the e-bike controller 302. The operation communication interface 412 communicates the data using any operable connection. An operable connection may be one in which signals, physical communications, and/or logical communications may be sent and/or received. An operable connection may include a physical interface, an electrical interface, and/or a data interface. One or more operation communication interfaces may provide for wireless communications through the operation communication device 416 in any now known or later developed format. Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

In accordance with various embodiments of the present disclosure, methods described herein may be implemented with software programs executable by a computer system, such as components of the control system 300 (e.g., the e-bike controller 302 and the rear derailleur 102), and/or other components on the bicycle 100 and/or worn by the user. Further, in an exemplary, non-limiting embodiment, implementations may include distributed processing, component/object distributed processing, and parallel processing. Alternatively, virtual computer system processing can be constructed to implement one or more of the methods or functionalities as described herein.

A computer program (also known as a program, software, software application, script, or code) may be written in any form of programming language, including compiled or interpreted languages, and the computer program may be deployed in any form, including as a standalone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and the apparatus may also be implemented as, special purpose logic circuitry (e.g., an FPGA or an ASIC).

As used in this application, the term 'circuitry' or 'circuit' refers to all of the following: (a) hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware, as well as other electronic components. The term "circuitry" would also cover, for example and if applicable to the particular claim element, a baseband integrated circuit or applications processor integrated circuit for a mobile computing device or a similar integrated circuit in server, a cellular network device, or other network device.

Processors suitable for the execution of a computer program include, by way of example, both general and special purpose microprocessors, and any one or more processors of any kind of digital computer. Generally, a processor receives instructions and data from a read only memory or a random access memory or both. The essential elements of a computer are a processor for performing instructions and one or more memory devices for storing instructions and data. Generally, a computer also includes, or is operatively coupled to receive data from or transfer data to, or both, one or more mass storage devices for storing data (e.g., magnetic, magneto optical disks, or optical disks). However, a computer need not have such devices. Moreover, a computer may be embedded in another device such as, for example, a mobile telephone, a personal digital assistant ("PDA"), a mobile audio player, a Global Positioning System ("GPS") receiver, a control unit, a rear derailleur, or a front gear changer, to name just a few. Computer readable media suitable for storing computer program instructions and data include all forms of non-volatile memory, media, and memory devices, including by way of example: semiconductor memory devices (e.g., EPROM, EEPROM, and flash memory devices); magnetic disks (e.g., internal hard disks or removable disks); magneto optical disks; and CD-ROM and DVD-ROM disks. The processor and the memory may be supplemented by, or incorporated in, special purpose logic circuitry.

The operation communication device 416 provides for data and/or signal communication from the operation component 400 to another component of the bicycle 100, or an external device such as a mobile phone or other computing device. The operation communication device communicates the data using any operable connection. An operable connection may be one in which signals, physical communications, and/or logical communications may be sent and/or received. An operable connection may include a physical interface, an electrical interface, and/or a data interface. The control communication device may be configured to communicate wirelessly, and as such include one or more antennae. The control communication device provides for wireless communications in any now known or later developed format.

A control antenna may also be provided. The control antenna may be a plurality of control antennae. The operation component 400 may include an antenna with circuitry of a PCB of the operation component 400; however, additional antennae may also be included in the circuitry. The control antenna may be integrated with another component of the bicycle 100 or may be an independent component. For example, the control antenna may be integrated as part of the e-bike controller 302 and/or as part of the rear derailleur 102.

The derailleur 102 may allow configuration of a number of ride modes that may be switched between by a control unit (e.g., the e-bike controller 302 or another controller on or outside of the bicycle 100). The control unit may switch the ride mode based on user input (e.g., via the electric actuator 148 or another interface) or automatically based on sensed conditions. In each mode, various characteristics of the ride mode may be adjusted. For example, gear hysteresis, minimum gear to shift to without pedaling, and/or other characteristics may be adjusted.

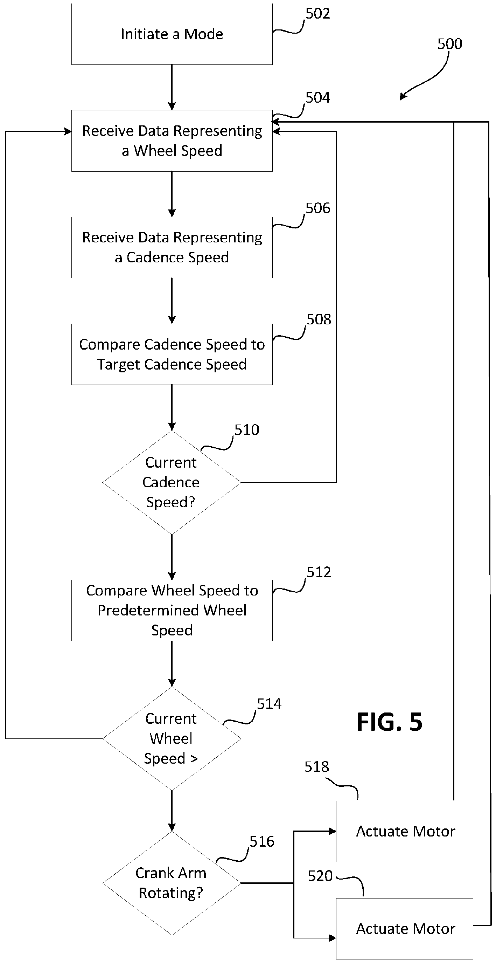

FIG. 5 is a flowchart of an embodiment of a method 500 for electromechanical control of components of the bicycle 100, for example. The flowchart also illustrates a method for transmitting and receiving wireless signals on the bicycle 100. As presented in the following sections, the acts may be performed using any combination of the components indicated in previous figures. For example, the following acts may be performed by at least some components of the control system 300, as well as additional or other components. In an embodiment, the acts may be performed by, for example, the rear derailleur 102, the e-bike controller 302, the power assist device 140, the one or more sensors, or any combination thereof. Additional, different, or fewer acts may be provided. The acts are performed in the order shown or in other orders. The acts may be repeated.

In act 502, a processor initiates a mode (e.g., a full automatic mode) for a bicycle. In the full automatic mode, a derailleur (e.g., the derailleur 102) is shifted without user input to maintain a gear that results in a rider cadence close to a defined target based on a current wheel speed. The processor may initiate the full automatic mode based on user input or automatically based on sensed riding conditions. In one embodiment, the processor is a processor of the derailleur and initiates the full automatic mode based on instructions from another processor that received the user input or identified the sensed riding conditions (e.g., the e-bike controller 302).

In act 504, the processor receives data representing a wheel speed from a sensor (e.g., a wheel speed sensor such as the wheel speed sensor 306). The wheel speed sensor measures rotational speed of a wheel continuously or at an interval (e.g., a variable interval based on the rotational speed of the wheel). The received data representing the wheel speed may be for a front wheel of the bicycle and/or a rear wheel of the bicycle. The data representing the wheel speed may be a rotational speed value (e.g., in revolutions per minute (RPM)).

In act 506, the processor receives data representing a cadence speed from a sensor (e.g., a pedal speed sensor or crank cadence sensor; the pedal speed sensor 304). The pedal speed sensor measures a rotational speed of a crank arm, to which a pedal of the bicycle is attached, continuously or at an interval (e.g., a variable interval based on the rotational speed of the crank arm). The data representing the cadence speed may be a rotational speed value (e.g., in RPM).

In act 508, the processor compares the data representing the cadence speed (e.g., current cadence speed) received in act 506 to a target cadence speed. The target cadence speed may be user defined. For example, the bicycle may include one or more control devices (e.g., two control buttons) mounted on the handlebars of the bicycle. The two control buttons may be in communication (e.g., wireless communication and/or wired communication) with, for example, a controller (e.g., the e-bike controller 302) and/or other components on the bicycle. One of the two control buttons may generate a signal instructing an increase in the target cadence speed when pressed, and the other of the two control buttons may generate a signal instructing a decrease in the target cadence speed when pressed. A single press of either of the two control buttons, for example, increments or decrements the target cadence speed (e.g., a setpoint) by a configurable number of RPM. In one embodiment, the setpoint is adjustable within functionally practical predetermined bounds (e.g., 60 RPMs - 120 RPMs).

In one embodiment, shifter buttons that control the rear derailleur upshift and downshift actions may be dual purposed to control the setpoint of the automatic shifting target cadence. The upshift and downshift buttons may trigger the upshift and downshift actions of the rear derailleur, respectively, if the shifter button is pressed for less than a predetermined amount of time (e.g., less than 300 milliseconds). If a shifter button is pressed and held for longer than the predetermined amount of time (e.g., a long press), the long press may be considered a setpoint adjustment command and may increment or decrement the target cadence.

Each setpoint adjustment may only modify the target cadence by a small amount (e.g., 1 RPM) to achieve a precise adjustment. In one embodiment, in order to make a large adjustment to the target cadence quickly, a long press may be followed by one or more shorter presses (e.g., less than 300 milliseconds). As long as each shorter press occurs within some threshold time after the previous press (e.g., 800 milliseconds), the shorter presses may each cause an additional increment or decrement to the setpoint.

A memory in communication with the processor (e.g., a memory of the derailleur 102 or a memory of the e-bike controller 302) stores a gear ratio table and upshift/downshift tables. When the setpoint is adjusted by the rider, the processor recalculates the gear ratio table and the upshift/downshift tables based on the adjusted setpoint. If a closest gear ratio changes at the time of the setpoint adjustment, the derailleur immediately shifts, ignoring hysteresis built into the upshift/downshift tables.

In one embodiment, the setpoint adjustment is configured through a system control interface (e.g., an e-bike system control interface). The system control interface may be capable of displaying a current setpoint and directly adjusting the setpoint on the rear derailleur. In another embodiment, the setpoint adjustment is executed via a mobile device application in direct communication with the rear derailleur.

In act 510, the processor determines whether the current cadence speed received in act 506 is within a range (e.g., within 3 RPMs) relative to the target cadence speed based on the comparison of act 506. If the current cadence speed is within the range, the method returns to act 504. If the current cadence speed is outside of the range, the method moves to act 512.

In act 512, the processor compares the current wheel speed to a predetermined minimum wheel speed. For example, the processor calculates a difference between the current wheel speed and the predetermined minimum wheel speed. The predetermined minimum wheel speed represents, for example, a functional minimum rotational wheel speed.

In act 514, the processor determines whether the current wheel speed is greater than or less than the predetermined minimum wheel speed based on the comparison in act 512. If the processor determines the current wheel speed is less than the predetermined minimum wheel speed, a shift is not initiated, and the method returns to act 504. If the processor determines the current wheel speed is greater than the predetermined minimum wheel speed, the method moves to act 516.

In act 516, the processor determines whether the crank arm is rotating. For example, the processor determines whether the crank arm is rotating based on the current cadence speed received at act 506. If the current cadence speed is greater than zero, the method moves to act 518. If the current cadence speed is equal to zero or approximately zero (e.g., less than or equal to 1 RPMs), the method moves to act 520.

In act 518, the processor instructs a motor (e.g., a motor of the derailleur or the assist motor 140) to actuate and shift to maintain a gear that results in a rider cadence close to (e.g., within the range discussed above) the target cadence speed identified in act 508. After act 518, the method returns to act 504.

When performing automatic shifts, the derailleur may adjust a minimum timing between shifts based on current wheel speed, current cog, current rider cadence, or some other parameter to provide that each shift is completed before a next shift is attempted. This timing is optimized to allow shifting as fast as possible without inducing a shift failure.

In act 520, the processor instructs, for example, the assist motor to run for a period of time to allow the chain to derail to a target cog (e.g., with the motor of the derailleur). After act 520, the method returns to act 504.

The assist motor is not to run without the user pedaling such that the motor is accelerating or maintaining the bicycle speed. This is not difficult if the current wheel speed is accurate. The wheel speed sensor may, however, update the current wheel speed only once per revolution of the wheel. During rapid deceleration events, the speed of the bicycle may drop below a speed of the assist motor before the wheel speed sensor has reported the speed change. Also, the performance of an automatic shifting method, for example, improves the faster the current wheel speed may be accurately updated. When the wheel comes to a complete stop, the magnet does not pass by the Hall effect sensor or the reed switch again, so the time to update the speed becomes infinite. Further, e-bikes may be required by law to not provide motor assistance to the rider if the e-bike is traveling above a speed threshold (e.g., 25 kph). To prevent motor assistance above a speed threshold, a motor control system is to have more information about the speed of the bicycle than is provided by the wheel speed sensor.

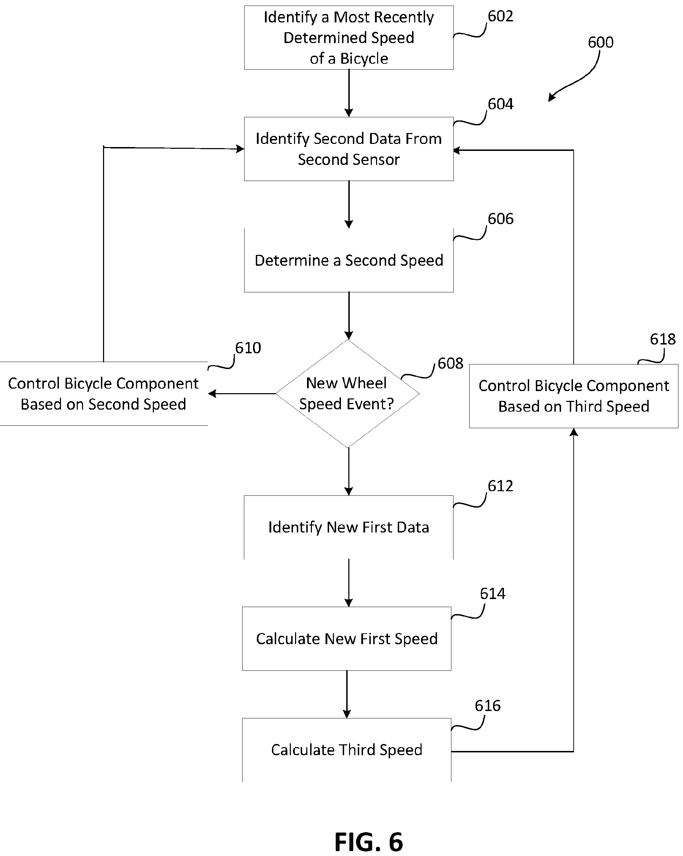

As discussed above, some wheel speed sensors that may be used for inputs to the method use a single magnet mounted on the wheel and a single reed switch or Hall effect sensor mounted to the frame. As the wheel rotates, the magnet passes by the Hall effect sensor or the reed switch once per revolution, generating a signal that is read by the processor. These sensor systems measure wheel angular velocity using a time between activations of the reed switch or the Hall effect sensor. As a wheel decelerates, a time period between Hall or reed events increases. The rotational speed calculated by the microprocessor is only updated when a sensor event occurs. As discussed below with reference to FIG. 6, an accelerometer of an IMU of the bicycle (e.g., the IMU 308) may be used to supplement the wheel speed sensor data.

FIG. 6 is a flowchart of an embodiment of a method 600 for electromechanical control of components of a bicycle (e.g., the bicycle 100). The flowchart also illustrates a method for transmitting and receiving wireless signals on the bicycle. As presented in the following sections, the acts may be performed using any combination of the components indicated in previous figures. For example, the following acts may be performed by at least some components of the control system 300, as well as additional or other components. In an embodiment, the acts may be performed by, for example, the rear derailleur 102, the e-bike controller 302, the power assist device 140, the one or more sensors, or any combination thereof. Additional, different, or fewer acts may be provided. The acts are performed in the order shown or in other orders. The acts may be repeated.

In act 602, a processor identifies a most recently determined bicycle speed (e.g., last bike speed). In one embodiment, the method 600 begins when the bicycle is set in motion from a stationary position. Accordingly, the last bike speed may be set to zero when the method 600 begins. The processor may identify when the bicycle is set in motion, and thus, when to execute the method 600, based on data generated by one or more sensors of the bicycle (e.g., the pedal speed sensor 304, the wheel speed sensor 306, and/or the IMU 308).

In one embodiment, the processor does not execute the method 600 until the processor determines an initial speed (e.g., the first calculated "last bike speed") based on data from a first sensor (e.g., first data). The first sensor may be a wheel speed sensor (e.g., the wheel speed sensor 306) such as, for example, a reed switch or a Hall effect sensor mounted to a frame of the bicycle. The first sensor may be mounted on or in any number of different parts of the bicycle including, for example, on a chain stay of the frame, at a fork end (e.g., a dropout) of the frame, or in a drive unit (e.g., the power assist device 140) of the bicycle.

The first sensor may be configured to sense at least one sensed element disposed about, for example, a bicycle wheel (e.g., a front wheel such as the front wheel 112 and/or a rear wheel such as the rear wheel 114) of the bicycle as the at least one sensed element rotates through a proximal region of the first sensor. The proximal region of the first sensor may be a region in which a sensed element is detectable by the first sensor.

The at least one sensed element includes one or more magnets attached to the bicycle wheel. In one embodiment, the at least one sensed element includes a single magnet attached to the bicycle wheel at a radial position of the bicycle wheel that passes through the proximal region of the first sensor (e.g., such that the single magnet is centered relative to the first sensor when the single magnet rotates past the first sensor with the bicycle wheel). In another embodiment, the at least one sensed element includes two or more magnets attached to the bicycle, such that the two or more magnets are equally spaced circumferentially. The two or more magnets may be attached to the bicycle wheel at radial positions of the bicycle wheel that pass through the proximal region of the first sensor, respectively.

The first sensor generates a signal (e.g., a pulse; an output voltage such as a Hall voltage) each time the first sensor detects a magnetic flux density around the first sensor (e.g., within the proximal region) above a predetermined threshold. In other words, the signal generated by the first sensor identifies receipt of a magnetic field pulse by the first sensor. The predetermined threshold is set, such that each time a magnet on the bicycle wheel passes through the proximal region of the first sensor, the magnetic flux density of the magnet, which is detected by the first sensor, causes the first sensor to generate the signal.

The generation of the output voltage by the first sensor may be considered a wheel speed event. The processor may not initiate the method 600 until the processor identifies two wheel speed events and is able to determine the initial speed (e.g., the first calculated "last bike speed"). Each time the first sensor generates, for example, an output voltage, the first sensor may transmit the respective output voltage and/or a data point of the first data identifying when the respective output voltage was generated by the first sensor to the processor. Alternatively or additionally, the processor may monitor or sample the first sensor, and identify when the respective output voltage was generated by the first sensor. For example, the processor may generate a data point of the first data identifying when (e.g., via a clock of the e-bike controller 302) the respective output voltage was generated by the first sensor.

As an example, after two wheel speed events (e.g., after the bicycle begins to move from a stationary position), the first data includes a first data point and a second data point that identify receipt of magnetic field pulses by the first sensor at a first time point and a second time point, respectively. The second time point is after the first time point. A memory (e.g., of the e-bike controller 302) in communication with the processor may store the first data (e.g., as times at which wheel speed events occur) as the first sensor generates output voltages with identified wheel speed events (e.g., the at least one magnet rotating through the proximal region of the first sensor). The processor may identify a respective subset of the first data (e.g., the first data point and the second data point representing the first time point and the second time point at which a first output voltage and a second output voltage were generated by the first sensor, respectively) for wheel speed calculations with each newly identified wheel speed event.

The memory may store a circumferential distance of the bicycle wheel between wheel speed events (e.g., wheel circumference per magnet). For example, in the embodiment in which the single magnet is attached to the bicycle wheel, the memory may store a circumference of the bicycle wheel. In the embodiment in which two or more magnets are attached to the bicycle wheel, the memory may store a portion of the circumference of the bicycle wheel corresponding to the number of magnets attached to the bicycle wheel (e.g., one half of the circumference for the embodiment in which two magnets are attached to the bicycle wheel; one third of the circumference for the embodiment in which three magnets are attached to the bicycle wheel). The circumferential distance stored in the memory represents a distance the bicycle travels between wheel speed events.

The processor may determine a time period between the two wheel speed events (e.g., corresponding to the first data point and the second data point of the first data). In other words, the processor may determine a time period between the first time point and the second time point. The processor may determine the initial speed based on the circumferential distance stored in the memory and the determined time period between the two wheel speed events. For example, the processor may calculate the initial speed by dividing the circumferential distance stored in the memory by the determined time period between the two wheel speed events. Such a calculated initial speed represents a first speed of the bicycle (e.g., determined when the at least one magnet is within the proximal region of the first sensor).

In act 604, the processor identifies second data from a second sensor of the bicycle. In one embodiment, the second sensor includes an accelerometer (e.g., as part of the IMU 308). The second data, which may be generated by the accelerometer, is different than the first data. For example, the second data includes a plurality of data points representing accelerations (e.g., along three axes and/or a resultant acceleration determined from the accelerations along the three axes) at a plurality of time points, respectively. The sampling rate of the second sensor (e.g., a second sampling rate) may be greater than the sampling rate of the first sensor (e.g., a first sampling rate), such that the second data includes more data points than the first data. In other words, the second sensor has a greater resolution than the first sensor. The first sampling rate may be variable in that the first sampling rate is dependent on a speed at which the bicycle is traveling.

The second sensor may transmit the second data to the processor at the second sampling rate. Alternatively or additionally, the second sensor may store the second data in the memory, and the processor may identify the second data within the memory. In one embodiment, the processor may monitor or sample the second sensor at the second sampling rate.

The processor may have to wait a period of time (e.g., a sampling period based on the second sampling rate) after act 602 for a current data point of the second data. For example, the processor may receive the current data point of the second data, which represents, for example, a current acceleration of the bicycle (e.g., according to the accelerometer; a current resultant accelerometer) at a third time point. The third time point may be after the second time point (e.g., the sampling period after the second time point).

In one embodiment, the processor may filter some or all of the second data identified by the processor. The processor may filter the second data using a bandpass filter, a highpass filter, a lowpass filter, one or more other filters, or any combination thereof.

In act 606, the processor determines an updated speed (e.g., a second speed) of the bicycle based on a subset of the identified second data and the initial speed determined in act 602 (e.g., the last bike speed). The subset of the identified second data may be or include, for example, the current data point of the second data (e.g., representing the current acceleration of the bicycle at the third time point).

The technique of tracking an object (e.g., the bicycle) in space by combining measurements of the accelerometer and the gyroscope of the IMU, for example, is known as dead reconning or inertial navigation. To perform inertial navigation, an output of the accelerometer of the second sensor (e.g., accelerations along the three axes; the current data point of the second data), for example, may be double integrated to track positional displacements, and an output of the gyroscope is single integrated to heading. The second sampling rate of the second sensor may result in a chain of vectors corresponding to a path of the object (e.g., the bicycle) through space. The processor may perform inertial navigation or may only integrate the output of the accelerometer of the second sensor (e.g., the current data point of the second data) once to determine a change in velocity.

The processor may receive a resultant acceleration from the second sensor or determine the resultant acceleration based on, for example, the accelerations along the three axes of the current data point of the second data. For example, the processor may determine the resultant acceleration based on the square root of the sum of squares of the accelerations along the three axes of the current data point of the second data. In one embodiment, the processor determines a portion of the resultant acceleration along the heading (e.g., as determined by integrating the output of the gyroscope of the second sensor), and the determined portion of the resultant acceleration is used for the calculations below.

The processor may determine the updated speed (e.g., the second speed) based on an addition of the product of the sampling period and the resultant acceleration to the initial speed determined in act 602. In other words, the processor determines a change in speed based on a subset of the second data, such that a ground speed of the bicycle may be determined more frequently than may be provided using only the first data generated by the first sensor. Low resolution wheel speed sensor data (e.g., one pulse per revolution) provided by the first sensor (e.g., generated when the at least one magnet is within the proximal region of the first sensor) is supplemented with data from the IMU between pulses (e.g., when the at least one magnet is outside the proximal region of the first sensor).

In act 608, the processor determines whether a new wheel speed event has taken place. For example, the processor identifies whether first data identifying a new wheel speed event has been received, identifies whether first data identifying a new wheel speed event has been saved in the memory, and/or samples the first sensor to determine whether a new wheel speed event has occurred. When the processor determines a new wheel speed event has not taken place (e.g., new first data not identified), the method 600 moves to act 610. When the processor determines a new wheel speed event has taken place (e.g., new first data identified), the method 600 moves to act 612.

In act 610, the processor may control an assist motor and/or a derailleur (e.g., the rear derailleur 102) of the bicycle based on the updated speed determined in act 606. The processor may control the assist motor and/or the derailleur based on the updated speed determined in act 606 according to the method 500 of FIG. 5 or another control method. For example, the processor may calculate an updated wheel speed based on the updated speed of the bicycle determined in act 606 (e.g., divide the updated speed of the bicycle by the circumference of the bicycle wheel) and control the assist motor and/or the derailleur based on the updated wheel speed according to the method 500 of FIG. 5.

In one embodiment, the processor compares the updated speed of the bicycle determined in act 606 to a predetermined threshold speed (e.g., a first predetermined threshold speed). The predetermined threshold speed may be stored in the memory and may represent a maximum speed at which the bicycle is to move. The processor may control the assist motor of the bicycle based on the comparison of the updated speed determined in act 606 to the predetermined threshold speed. For example, the processor may be configured to prevent or stop the assist motor of the bicycle from providing power to a drive train (e.g., the drive train 122) of the bicycle when, based on the comparison, the updated speed determined in act 606 is greater than the predetermined threshold speed. By using the second data from the second sensor to update the speed of the bicycle between pulses identified by the first sensor, the processor may prevent the bicycle from exceeding the maximum speed even when the at least one magnet is outside of the proximal region of the first sensor.

After act 610, the method 600 returns to act 604, and the processor waits for the next data point of the second data (e.g., the next measurement by the accelerometer according to the second sampling rate; the current data point of the second data). When the method 600 returns to act 604, the updated speed determined in act 606 becomes the last determined speed for when at least acts 604-608 are repeated.

In act 612, the processor identifies a most recently generated data point (e.g., a third data point) of the first data. For example, the processor receives the most recently generated data point from the first sensor, identifies the most recently generated data point within the memory, and/or samples the first sensor and identifies the most recently generated data point. In one example, in which the new wheel speed event identified in act 608 is a third wheel speed event, the first data further includes a third data point (e.g., the most recently generated data point) that identifies receipt of a magnetic field pulse by the first sensor at a third time point. The third time point is after the second time point. Acts 604-608 may be repeated a number of times between the second time point and the third time point, such that the speed of the bicycle is updated the number of times. In other words, the determination of the second speed is repeated the number of times.

In act 614, the processor may identify a new subset of the first data including the most recently generated data point of the first data (e.g., including the second data point and the third data point representing the second time point and the third time point at which the second output voltage and a third output voltage were generated by the first sensor, respectively) and determine a new first speed (e.g., update the first speed) based on the new subset of the first data. For example, the processor may determine a time period between the two most recent wheel speed events (e.g., corresponding to the second data point and the third data point of the first data). In other words, the processor may determine a time period between the second time point and the third time point, and determine the updated first speed based on the circumferential distance stored in the memory and the determined time period between the second time point and the third time point. For example, the processor may calculate the updated first speed by dividing the circumferential distance by the determined time period between the second time point and the third time point.

In act 616, the processor may determine a third speed based on the updated first speed determined in act 614 and the updated second speed determined in act 606 (e.g., the second speed most recently determined in act 606). The processor may determine the third speed when, for example, the at least one magnet is within the proximal region of the first sensor. The processor may determine the third speed based on, for example, a weighted sum of the updated first speed determined in act 614 and the updated second speed determined in act 606. For example, the first speed and the second speed are combined into a single value by multiplying each of the first speed and the second speed by a respective scaling constant, and summing the resultant values. In one embodiment, the first speed and the second speed are combined using Kalman filter methods, though other methods of combining may be used.

The scaling constants add up to a value of one and may have any number of values. For example, a first scaling constant, which is associated with the first speed (e.g., determined based only on data from the first sensor), may be 0.75, and a second scaling constant, which is associated with the second speed (e.g., determined based on data from the second sensor), may be 0.25. Other values for the scaling constants may be used.

In one embodiment, the values of the first constant and the second constant are variable based on the speed of the bicycle. For example, at higher speeds, the first speed (e.g., calculated based on the wheel speed sensor) becomes more accurate and updates more frequently, so the utility of the updated second speeds (e.g., calculated based on the accelerometer of the IMU) is reduced.

The processor may determine the values of the first constant and the second constant in any number of ways. For example, the processor may determine the value of one of the first constant and the second constant based on a predetermined function (e.g., linear function), with the speed of the bicycle as an input of the predetermined function and the value as an output of the predetermined function. The other of the first constant and the second constant may be determined as a difference between one and the determined value. As another example, the memory may store a look-up table, and through interpolation, the processor may determine the first constant and/or the second constant, for example.

In one embodiment, at a particular first speed (e.g., calculated based on the wheel sensor), only the first speed is used for control of the bicycle. For example, when the updated first speed determined in act 614 is above a second predetermined threshold speed (e.g., 15 kph), the processor stops updating the speed of the bicycle between wheel speed events.

In act 618, the processor may control the assist motor and/or the derailleur (e.g., the rear derailleur 102) of the bicycle based on the third speed determined in act 616. The processor may control the assist motor and/or the derailleur based on the third speed determined in act 616 according to the method 500 of FIG. 5 or another control method. In one embodiment, the processor controls the assist motor and/or the derailleur of the bicycle based on the updated first speed determined in act 614 instead of the third speed determined in act 616.

In one embodiment, the processor compares the third speed determined in act 616 to the first predetermined threshold speed (e.g., representing the maximum speed at which the bicycle is to move). The processor may control the assist motor of the bicycle based on the comparison of the third speed determined in act 616 to the first predetermined threshold speed. For example, the processor may be configured to prevent or stop the assist motor of the bicycle from providing power to the drive train of the bicycle when, based on the comparison, the third speed determined in act 616 is greater than the first predetermined threshold speed.

After act 618, the method 600 returns to act 604, and the processor waits for the next data point of the second data (e.g., the next measurement by the accelerometer according to the second sampling rate; the current data point of the second data). When the method 600 returns to act 604, the third speed determined in act 616 becomes the last determined speed for when at least acts 604-608 are repeated.

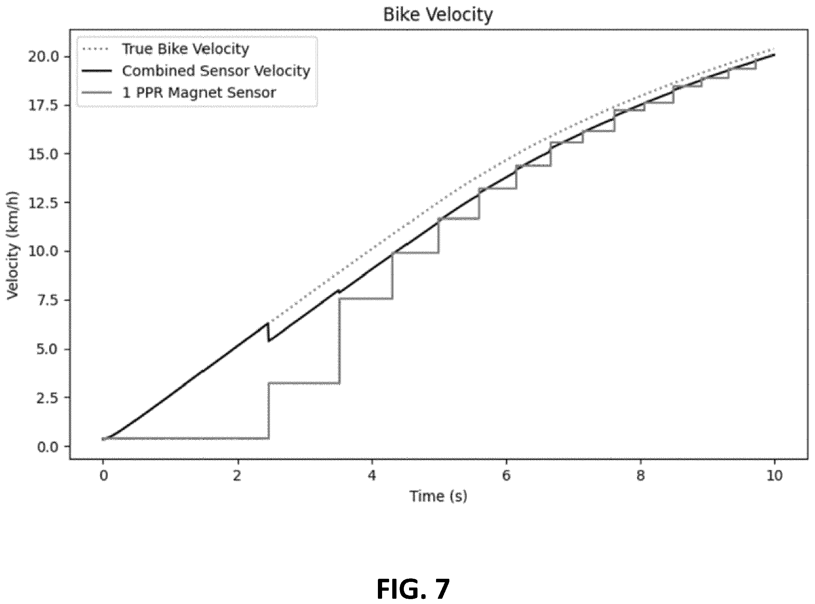

FIG. 7 is an example of a graph of velocity versus time for a bicycle for which speed is calculated using, for example, the method 600 of FIG. 6. The velocity is in kilometers per hour, and the time is in seconds. The dotted line shows the true velocity of the bicycle over time. As discussed above, as the speed of the bicycle increases (e.g., towards the right side of the plot), the first speed (e.g., "1 PPR Magnet Sensor" in the graph) of the bicycle better approximates the true velocity of the bicycle. When the bicycle starts moving from a stationary position (e.g., the left side of the plot), the first speed of the bicycle does a poor job approximating the true velocity of the bicycle, and the second speed (e.g., as part of the "Combined Sensor Velocity") helps fill in the gaps between wheel speed events. As illustrated in FIG. 7, a wheel speed event occurs at each stair step of the plot line labeled "1 PPR Magnet Sensor."

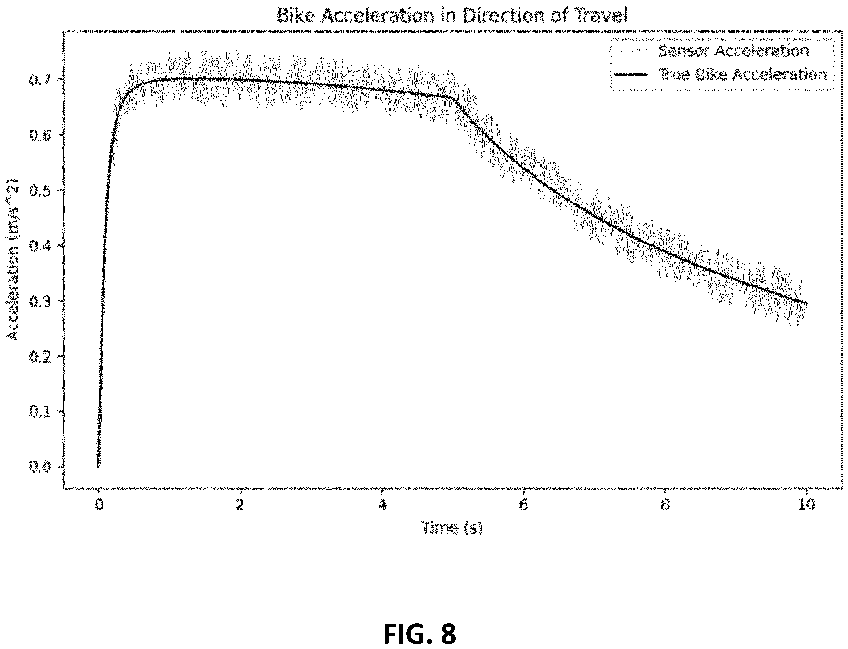

FIG. 8 is an example of a graph of acceleration versus time for which speed is calculated using, for example, the method 600 of FIG. 6. The acceleration is in meters per second squared, and the time is in seconds. The plot of acceleration versus time in FIG. 8 corresponds to the plot of velocity versus time of FIG. 7. The plot labeled "Sensor Acceleration" represents the acceleration of the bicycle determined by the second sensor, which oscillates about the "True Bike Acceleration" and approximates the "True Bike Acceleration" well.

The processor may end the method 600 in any number of ways. When a rider of the bicycle stops the bicycle, and the bicycle is no longer moving (e.g., as determined by the first speed, the second speed, and/or the third speed) for a predetermined period of time (e.g., two seconds), the processor may end the method 600. Alternatively or additionally, the rider may interact with an input device (e.g., a button) on the bicycle, and the input device may generate a signal in response to the rider interaction with the input device and transmit the generated signal to the processor. The processor may receive the generated signal and end the method 600 in response to the received signal. The processor may end the method 600 in other ways and/or in response to other signals or data.

Limitations of sampling rate, and the accumulation of errors from sensor noise and sensor drift may provide that with time, the integration(s) of the output of the accelerometer of the second sensor (e.g., to determine a change in speed) and the integration of the output of the gyroscope of the second sensor (e.g., to determine a heading) will diverge from true speed, position, and/or orientation of the bicycle, respectively. This error may be corrected or reduced by periodic calibration (e.g., every predetermined number of wheel speed events, every predetermined time period) using data (e.g., third data) from a source other than the first sensor and the second sensor. For example, the speed, position, and/or orientation of the bicycle determined based on integration of data generated by the second sensor may be calibrated using magnetic heading determined by another sensor, acceleration due to gravity, or GPS data. Other data from other sensors may be used for calibration. The processor may calibrate at least a portion of the second data (e.g., a portion of the resultant acceleration) by adjusting the second sensor such that the portion of the second data is equal to the third data (e.g., acceleration due to gravity) periodically.

In one embodiment, the processor may identify wheel slip and/or wheel lockout based on the first speed determined in act 614 and a respective second speed determined in act 606. After each determination of the second speed in act 606, the processor may compare the determined second speed to the most recently determined first speed. For example, the processor may determine a difference between the determined second speed and the most recently determined first speed, and compare the determined difference to one or more predetermined threshold differences. The one or more predetermined threshold differences may be stored in the memory, for example.

In one embodiment, when the determined difference is positive (e.g., the determined second speed is greater than the most recently determined first speed) and the determined difference is greater than a first predetermined threshold difference, the processor may identify a wheel lockout. In other words, the processor may identify that the bicycle is moving at a particular speed while the front wheel and/or the rear wheel of the bicycle is not rotating or is rotating at a lower rate than would be expected. When the determined difference is negative (e.g., the determined second speed is less than the most recently determined first speed) and an absolute value of the determined difference is greater the first predetermined threshold difference or a second predetermined threshold difference, the processor may identify wheel slip. In other words, the processor may identify that the front wheel and/or the rear wheel of the bicycle is rotating at a particular rate while the bicycle is stationary or moving at a speed lower than would be expected.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations and/or acts are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that any described program components and systems can generally be integrated together in a single software product or packaged into multiple software products.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, are apparent to those of skill in the art upon reviewing the description.

The Abstract of the Disclosure is provided to comply with 37 C.F.R. §1.72(b) and is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

## Claims

1. An electronic component for a bicycle, the electronic component comprising:
a processor configured to:
receive first data from a first sensor configured to sense at least one sensed element disposed about a bicycle wheel as the at least one sensed element rotates through a proximal region of the first sensor;
receive second data from a second sensor, the second data being different than the first data;
determine a first speed based on a subset of the received first data when a sensed element of the at least one sensed element is within the proximal region of the first sensor; and
determine a second speed based on a subset of the received second data and the first speed when the sensed element is not within the proximal region of the first sensor.

2. The electronic component of claim 1, wherein the first sensor is a bicycle wheel speed sensor, and the second sensor is an accelerometer.

3. The electronic component of claim 1 or 2, wherein the processor is further configured to:
compare the determined second bicycle speed to a predetermined threshold speed; and
control an assist motor of the bicycle based on the comparison.

4. The electronic component of claim 3, wherein the processor being configured to control the assist motor of the bicycle based on the comparison comprises the processor being configured to prevent or stop the assist motor of the bicycle from providing power to a drive train of the bicycle when the determined second bicycle speed is greater than the predetermined threshold speed.

5. The electronic component of one of the preceding claims, wherein the first data includes a first data point, a second data point, and a third data point that identify receipt of magnetic field pulses by the first sensor at a first time point, a second time point, and a third time point, respectively, the second time point being after the first time point and the third time point being after the second time point, and
wherein the second data includes a plurality of data points received at a plurality of time points, respectively, between the second time point and the third time point, the plurality of data points representing accelerations of the bicycle, respectively.

6. The electronic component of claim 5, wherein the subset of the received first data includes the first data point and the second data point,
wherein the determination of the first speed comprises determination of the first speed at the second time point based on the first data point of the first data received at the first time point and the second data point of the first data received at the second time point,
wherein the subset of the received second data includes a data point of the plurality of data points of the second data received by the second sensor at a fourth time point, the fourth time point being between the second time point and the third time point, and
wherein the determination of the second speed comprises determination of the second speed at the fourth time point based on the determined first speed and the data point of the second data received by the second sensor at the fourth time point.

7. The electronic component of claim 6, wherein the determination of the first speed further comprises:
determination of a time period between the second time point and the first time point; and
determination of the first speed based on the determined time period and a circumference of a wheel of the bicycle.

8. The electronic component of claim 6 or 7, wherein for each data point of the plurality of data points of the second data received by the second sensor between the second time point and the third time point, the processor is further configured to:
update the determined second speed, each respective update of the determined second speed comprising:
determination of a change in velocity based on the respective data point of the second data; and
calculation of an updated second speed, the calculation of the updated second speed comprising a sum of the determined second speed and the determined change in velocity;
compare the updated second speed to a predetermined threshold speed;
control an assist motor of the bicycle based on the comparison of the updated second speed to the predetermined threshold speed; and
set the second speed as the updated second speed,
wherein as an option the determination of the change in velocity comprises integration of the respective data point of the second data over a sampling period of the second sensor.

9. The electronic component of claim 8, wherein the subset of the received first data is a first subset of the received first data,
wherein the processor is further configured to:
update the first speed based on a second subset of the received first data, the second subset of the received first data including the second data point and the third time point received at the second time point and the third time point, respectively;
determine a third speed at the third time point when the sensed element is within the proximal region of the first sensor, the determination of the third speed comprising calculation of a weighted sum of the updated first speed and the updated second speed,
wherein as an option
- a first of the weights, which corresponds to the updated first speed, and
- a second of the weights, which corresponds to the updated second speed, are variable based on the bicycle speed.

10. The electronic component of claim 9, wherein the predetermined threshold speed is a first predetermined threshold,
wherein at the third time point, the processor is further configured to:
determine a difference between the updated first speed and the updated second speed;
compare the determined difference to a second predetermined threshold; and
identify, based on the comparison of the determined difference to the second predetermined threshold, wheel slip or wheel lock,
wherein as an option the processor is configured to identify the wheel slip when the updated first speed is greater than the updated second speed and the determined difference is greater than the second predetermined threshold.

11. The electronic component of one of the preceding claims, wherein the processor is further configured to calibrate the received second data, the calibration of the received second data comprising:
identification of third data, the third data being related to an orientation of the bicycle, an acceleration of the bicycle, a position of the bicycle, or any combination thereof, a source of the third data being different than the first sensor and the second sensor; and
calibration of the received second data based on the identified third data,
wherein as an option the identified third data represents a magnetic heading of the bicycle, acceleration due to gravity, or global positioning system (GPS) data.

12. A system for controlling a bicycle, the system comprising:
a first sensor configured to generate first data at a first sampling rate, the first data including a first data point received at a first time point and a second data point received at a second time point, the second time point being after the first time point, wherein the first data point and the second data point of the first data identify reception of magnetic field pulses at the first time point and the second time point, respectively;
a second sensor configured to generate second data at a second sampling rate, the second sampling rate being greater than the first sampling rate, the second data including a data point identifying an acceleration of the bicycle;
a memory configured to store data for a circumferential distance of a wheel of the bicycle; and
a processor in communication with the memory, the first sensor, and the second sensor, the processor being configured to:
receive the first data and the second data;
determine a first speed, the determination of the first speed comprising:
determination of a time period between the receipt of the second data point at the second time point and the receipt of the first data point at the first time point; and
determination of the first speed based on the determined time period and the stored data for the circumferential distance of the wheel;
determine a second speed, the determination of the second speed comprising:
determination of a change in velocity, the determination of the change in velocity comprising integration of the acceleration of the data point over a sampling period, the sampling period being based on the second sampling rate; and
determination of the second speed based on the determined change in velocity and the determined first speed.

13. The system of claim 12, wherein the processor is further configured to:
compare the determined second speed to a predetermined threshold speed; and
control an assist motor of the bicycle based on the comparison.

14. The system of claim 12 or 13, wherein the first sensor is a first type of sensor, and the second sensor is a second type of sensor, the second type of sensor being different than the first type of sensor,
wherein optionally the first sensor is a reed switch or a Hall effect sensor, and the second sensor includes an accelerometer.

15. A controller for a bicycle, the controller comprising:
a processor configured to:
receive first data from a first sensor at a first sampling rate, the first data including two data points identifying two time points at which magnetic field pulses are received by the first sensor, respectively;
receive second data from a second sensor at a second sampling rate, the second sampling rate being greater than the first sampling rate, the second data including a data point identifying an acceleration of the bicycle;
determine a first speed representation of the bicycle based on the identified two time points of the first data;
determine a second speed representation of the bicycle based on the identified acceleration of the second data;
determine a speed of the bicycle based on the determined first speed representation and the determined second speed representation.
